# EUROPEAN PATENT APPLICATION

(11) **EP 4 606 555 A1**
(43) Date of publication of application: **27.08.2025**
(21) Application number: 22966523.7
(22) Date of filing: 25.11.2022
(51) Int. Cl.: B29C 48/685, B29B 7/46, B29B 17/00, B29C 48/40, B29C 48/57, C08J 11/12

(54) **EXTRUDER**

(71) Applicant: The Japan Steel Works, Ltd., Tokyo 141-0032 (JP)
(72) Inventor: SAGA, Daigo, Tokyo 141-0032 (JP)
(74) Representative: Simmons & Simmons LLP (Munich)
(86) International application number: PCT/JP2022/043553
(87) International publication number: WO 2024/111114

(57) **Abstract**

The cross-sectional area of the inside of a pair of cylinders **21,** 22 in the direction orthogonal to the direction from a supply region AR1 to a kneading region AR2 is greater in the kneading region AR2 (cross-sectional area S2) than in the supply region AR1 (cross-sectional area S1) . An extruder 10 can be enlarged thereby, that is, the residence time of a resin raw material (resin pellets PR, molten resin MR) can be lengthened, and the processing capacity can be increased without making the pair of cylinders **21,** 22 and the screw 50 longer and without increasing the diameter of the pair of cylinders **21,** 22 and the screw 50. Resin raw materials that require a longer residence time can thus be handled easily, making it possible to use the extruder 10 for a wide range of melt kneading applications.

## Description

### TECHNICAL FIELD

The present invention relates to an extruder configured to melt and knead a resin raw material.

### BACKGROUND ART

For example, Patent Document 1 describes an extruder configured to melt and knead a resin raw material. The extruder described in Patent Document 1 includes a cylinder and a screw, and the screw is arranged inside the cylinder. Thus, a resin raw material supplied from an inlet into the cylinder is conveyed toward a discharge port while being melted and kneaded by the rotation of the screw.

### RELATED ART DOCUMENTS

### PATENT DOCUMENTS

Patent Document 1: Japanese Unexamined Patent Application Publication No. 2016-087896

### SUMMARY OF THE INVENTION

### PROBLEMS TO BE SOLVED BY THE INVENTION

An inner cross-sectional area of a cylinder of an extruder is generally uniform from an inlet of a resin raw material to a discharge port. Therefore, it is necessary to increase the size of the extruder in order to improve the processing capacity.

Other problems and novel features will become apparent from the description of this specification and the accompanying drawings.

### MEANS FOR SOLVING THE PROBLEMS

In an extruder disclosed in one embodiment of this application, an inner cross-sectional area of a cylinder is larger in a certain region than in other regions.

### EFFECTS OF THE INVENTION

According to one embodiment, the processing capacity of the resin raw material can be improved without increasing the size of the extruder.

### BRIEF DESCRIPTION OF THE DRAWINGS

[FIG. 1] is a partial cross-sectional view illustrating a structure of an extruder.
[FIG. 2] is a cross-sectional view illustrating a kneading processing unit in the first embodiment.
[FIG. 3] is a cross-sectional view taken along a line A-A and line C-C in FIG. 2.
[FIG. 4] is a cross-sectional view taken along a line B-B in FIG. 2.
[FIG. 5A] is a perspective view illustrating a forward feed flight.
[FIG. 5B] is a diagram illustrating the forward feed flight seen from a lateral side.
[FIG. 6A] is a perspective view illustrating a forward feed kneading element.
[FIG. 6B] is a diagram illustrating the forward feed kneading element seen from a lateral side.
[FIG. 7] is a table for comparing a retention time between the first embodiment and a comparative example.
[FIG. 8] is a cross-sectional view illustrating a kneading processing unit in the second embodiment.
[FIG. 9] is a cross-sectional view illustrating a kneading processing unit in the third embodiment.
[FIG. 10A] is a perspective view illustrating a backward feed flight.
[FIG. 10B] is a diagram illustrating the backward feed flight seen from a lateral side.
[FIG. 11A] is a perspective view illustrating a backward feed kneading element.
[FIG. 11B] is a diagram illustrating the backward feed kneading element seen from a lateral side.
[FIG. 12] is a diagram illustrating the fourth embodiment and corresponding to FIG. 4.
[FIG. 13] is a diagram illustrating the fifth embodiment and corresponding to FIG. 4.
[FIG. 14] is a diagram illustrating the sixth embodiment and corresponding to FIG. 4.
[FIG. 15] is a diagram illustrating the seventh embodiment and corresponding to FIG. 4.
[FIG. 16] is a diagram illustrating the eighth embodiment and corresponding to FIG. 4.
[FIG. 17] is a diagram illustrating the ninth embodiment and corresponding to FIG. 4.
[FIG. 18] is a diagram illustrating the tenth embodiment and corresponding to FIG. 4.
[FIG. 19] is a diagram illustrating the eleventh embodiment and corresponding to FIG. 4.
[FIG. 20] is a diagram illustrating the twelfth embodiment and corresponding to FIG. 4.
[FIG. 21] is a diagram illustrating the thirteenth embodiment and corresponding to FIG. 4.
[FIG. 22] is an enlarged cross-sectional view illustrating a kneading processing unit in the fourteenth embodiment.
[FIG. 23] is an enlarged cross-sectional view illustrating a kneading processing unit in the fifteenth embodiment.
[FIG. 24] is a partial cross-sectional view illustrating a part of an extruder in the sixteenth embodiment.
[FIG. 25] is a diagram illustrating the seventeenth embodiment and corresponding to FIG. 4.
[FIG. 26] is a diagram illustrating the eighteenth embodiment and corresponding to FIG. 4.
[FIG. 27] is a diagram illustrating the nineteenth embodiment and corresponding to FIG. 4.

### DETAILED DESCRIPTION OF PREFERRED EMBODIMENTS

Hereinafter, embodiments of the present invention will be described in detail with reference to drawings. In all the drawings for describing the embodiments, members, devices, and others having the same or substantially same function are denoted by the same reference characters, and the repetitive descriptions thereof will be omitted.

### <First Embodiment>

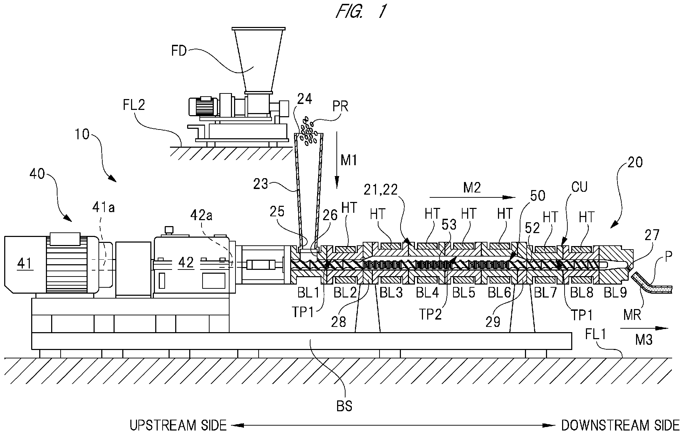

As illustrated in FIG. 1, an extruder 10 in the first embodiment is used for melting and kneading resin pellets (resin raw material) PR. For example, the extruder 10 is used to produce reinforcement fibers such as tire cords. Here, the tire cord is a material that maintains the shape of a rubber tire for an automobile and the like.

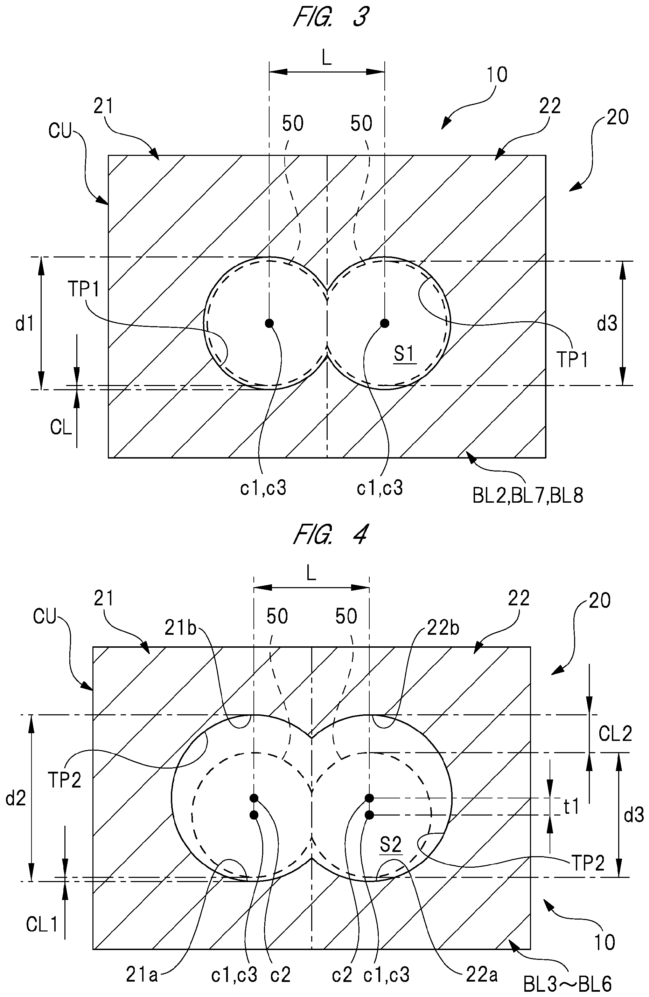

As illustrated in FIG. 3 and FIG. 4, the extruder 10 is a twin-screw extruder provided with two screws 50. The extruder 10 includes a kneading processing unit 20 provided with a cylinder unit CU (a pair of cylinders 21 and 22) in which a pair of screws 50 are arranged and to which the resin pellets PR are supplied and a drive unit 40 configured to rotate the pair of screws 50.

### <Hopper>

A hopper 23 is provided on the kneading processing unit 20. The hopper 23 is formed in a substantially cylindrical shape, and the resin pellets PR formed into a granular shape are stored inside the hopper 23. The hopper 23 has a pellet inlet 24 and a pellet outlet 25, and the resin pellets PR are fed from a gravimetric feeder FD toward the pellet inlet 24. Note that the gravimetric feeder FD is installed on an upper floor FL2 or the like provided above an installation floor FL1 on which the extruder 10 is installed.

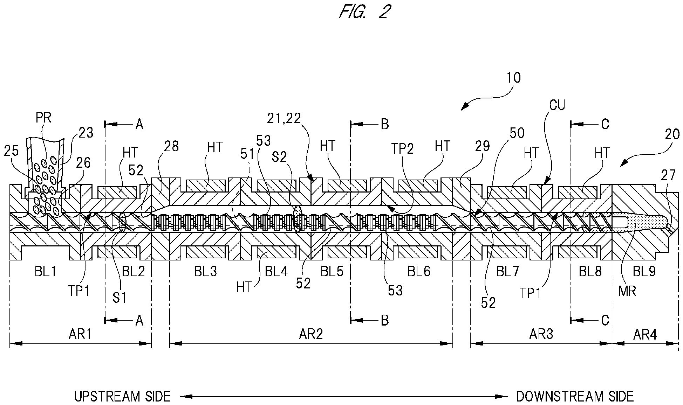

The resin pellets PR stored in the hopper 23 fall due to gravity toward the pellet outlet 25 and are supplied from the pellet outlet 25 into a small block BL1 (the pair of cylinders 21 and 22) arranged on the downstream side. Here, as illustrated in FIG. 1 and FIG. 2, the side where the hopper 23 of the kneading processing unit 20 is installed, that is, the side where the resin pellets PR before being melted and kneaded are supplied is the "upstream side." Also, the side where a conveyance pipe P of the extruder 10 is arranged, that is, the side where a molten resin MR after being melted and kneaded is discharged is the "downstream side."

### <Drive Unit>

The drive unit 40 includes an electric motor 41 as a drive source and a reducer 42 configured to reduce the rotation speed of the electric motor 41 to increase the torque. Specifically, a rotational force of a rotation shaft 41a of the electric motor 41 is transmitted to the reducer 42, and the rotational force reduced in speed and increased in torque is transmitted from an output shaft 42a of the reducer 42 to the pair of screws 50 (a pair of shafts 51) of the kneading processing unit 20 via a gear mechanism and the like (not illustrated). As a result, the pair of screws 50 are each rotated in the same direction. However, each of the pair of screws 50 can also be rotated in different directions depending on the purpose of the melting and kneading process and others.

Note that the rotation speed of the pair of screws 50 is precisely controlled by controlling the rotation speed of the electric motor 41. Also, the drive unit 40 made up of the electric motor 41 and the reducer 42 is supported by a base BS fixed to the installation floor FL1. Furthermore, the rotation shaft 41a and the output shaft 42a are parallel to the installation floor FL1.

### <Kneading Processing Unit>

As illustrated in FIG. 3 and FIG. 4, the kneading processing unit 20 includes the cylinder unit CU. The cylinder unit CU is formed by arranging the pair of (two) cylinders 21 and 22 in parallel with each other and integrating them together. In FIG. 3 and FIG. 4, a double-dot dashed line (imaginary line) is drawn between the pair of cylinders 21 and 22 in order to make them easily understood. Also, the cylinder unit CU is parallel to the installation floor FL1 like the rotation shaft 41a and the output shaft 42a. Further, the cylinder unit CU is supported by the base BS fixed to the installation floor FL1.

The cylinder unit CU is made up of a total of nine small and large blocks BL1 to BL9. Specifically, the cylinder unit CU is formed by arranging a total of nine small and large blocks BL1 to BL9 in an axial direction of the rotation shaft 41a and the output shaft 42a and connecting them to each other.

The small block BL1 located on the upstream side of the cylinder unit CU, that is, on the side where the hopper 23 is provided serves as an "entrance block" through which the resin pellets PR are supplied to the inside of the cylinder unit CU. A supply port 26 is provided in the small block BL1, and the supply port 26 opens in a direction perpendicular to the installation floor FL1 and faces the pellet outlet 25 of the hopper 23. Thus, the resin pellets PR stored in the hopper 23 are supplied to the inside of the pair of cylinders 21 and 22 through the pellet outlet 25 and the supply port 26.

Also, the small block BL9 located on the downstream side of the cylinder unit CU, that is, on the side where the conveyance pipe P is provided serves as an "exit block" through which the molten resin MR generated after melting and kneading the resin pellets PR is discharged to the outside of the cylinder unit CU. Specifically, a molten resin discharge port (discharge port) 27 for discharging the molten resin MR to the outside is provided in the small block BL9 (in the pair of cylinders 21 and 22). Also, the conveyance pipe P to convey the molten resin MR to the next process is arranged on the further downstream side of the molten resin discharge port 27 (on the right in FIG. 1). Thus, the molten resin MR is supplied through the conveyance pipe P to the processing apparatus (not illustrated) of the next process.

Furthermore, the small block BL2 is connected to the downstream side of the small block BL1, and a pair of small conveyance paths TP1 (see FIG. 2 and FIG. 3) are provided inside the small block BL2 (inside the pair of cylinders 21 and 22). Also, a heater HT is attached to an outer periphery of the small block BL2. Thus, the resin pellets PR passing through the pair of small conveyance paths TP1 of the small block BL2 are heated and melted by the heater HT.

Also, a pair of small blocks BL7 and BL8 which have the same shape and structure as the small block BL2 are arranged side by side on the upstream side of the small block BL9. Namely, the pair of small conveyance paths TP1 are provided inside the small blocks BL7 and BL8 (inside the pair of cylinders 21 and 22), respectively. Also, heaters HT are attached to the outer periphery of the small blocks BL7 and BL8, respectively. Thus, the molten resin MR passing through the small blocks BL7 and BL8 reaches the small block BL9 in a molten state without being hardened.

Also, in a longitudinal direction of the cylinder unit CU, a total of four large blocks BL3 to BL6 which are larger than the small blocks BL2, BL7, and BL8 are arranged side by side between the small block BL2 and the small block BL7. Further, a pair of large conveyance paths TP2 (see FIG. 2 and FIG. 4) are provided inside the large blocks BL3 to BL6 (inside the pair of cylinders 21 and 22), respectively.

Further, heaters HT are attached also to the outer periphery of the large blocks BL3 to BL6, respectively. Thus, the resin pellets PR passing through the large blocks BL3 to BL6 are kneaded and turned into the molten resin MR. Note that the resin pellets PR are heated also by the heat generated by the shearing action due to the rotation of the pair of screws 50 in addition to the heating by the heaters HT.

Here, as indicated by an arrow M1 in FIG. 1, the resin pellets PR fed from the gravimetric feeder FD to the hopper 23 are supplied from the hopper 23 to the inside of the small block BL1 serving as the entrance block. Thereafter, as indicated by an arrow M2 in FIG. 1, the resin pellets PR supplied to the inside of the pair of cylinders 21 and 22, that is, the inside of the pair of small conveyance paths TP1 and large conveyance paths TP2 are turned into the molten resin MR while being kneaded by the rotation of the pair of screws 50, and the molten resin MR is conveyed to the downstream side of the cylinder unit CU. Then, as indicated by an arrow M3 in FIG. 1, the molten resin MR is finally sent to the conveyance pipe P from the molten resin discharge port 27 of the small block BL9 serving as the exit block.

Also, as illustrated in FIG. 3 and FIG. 4, an inner diameter d1 of the small conveyance path TP1 of the small blocks BL2, BL7, and BL8 is smaller than an inner diameter d2 of the large conveyance path TP2 of the large blocks BL3 to BL6 (d1 < d2). Namely, referring to FIG. 2, a cross-sectional area of the cylinders 21 and 22 perpendicular to a direction from a supply region AR1 to a kneading region AR2 is larger in a certain region than in other regions. Specifically, an inner cross-sectional area S2 in the kneading region AR2 is larger than an inner cross-sectional area S1 in the supply region AR1 (S2 > S1).

For this reason, as illustrated in FIG. 1 and FIG. 2, a relatively large step is formed between the small block BL2 and the large block BL3 and between the large block BL6 and the small block BL7. This step hinders the smooth conveyance of the resin raw material (resin pellets PR, molten resin MR). Therefore, conversion adapters 28 and 29 that gradually change the inner diameter to gently connect the small conveyance paths TP1 and the large conveyance paths TP2 are provided between the small block BL2 and the large block BL3 and between the large block BL6 and the small block BL7, respectively.

Specifically, the conversion adapter 28 between the small block BL2 and the large block BL3 has an inner diameter that gradually increases from the upstream side to the downstream side. On the other hand, the conversion adapter 29 between the large block BL6 and the small block BL7 has an inner diameter that gradually decreases from the upstream side to the downstream side.

Further, as illustrated in FIG. 2 to FIG. 4, the screws 50 are rotatably housed inside the small conveyance paths TP1 and the large conveyance paths TP2, which are provided in the pair of cylinders 21 and 22, respectively. Hereinafter, the structure of the small conveyance paths TP1, the large conveyance paths TP2, and the screws 50 housed therein will be described in detail.

### <Small Conveyance Path>

As illustrated in FIG. 3, in the small blocks BL2, BL7, and BL8, the small conveyance path TP1 of one cylinder 21 and the small conveyance path TP1 of the other cylinder 22 are arranged parallel to each other, and the insides thereof communicate with each other. Further, a distance L between centers c1 of the small conveyance paths TP1 is smaller than the inner diameter d1 of the small conveyance path TP1 (L < d1). Thus, when the pair of small conveyance paths TP1 are viewed in an axial direction of the screw 50, facing portions of the pair of small conveyance paths TP1 partially overlap each other, and the pair of small conveyance paths TP1 communicate with each other at the overlapping portions.

### <Large Conveyance Path>

As illustrated in FIG. 4, in the large blocks BL3 to BL6, the large conveyance path TP2 of one cylinder 21 and the large conveyance path TP2 of the other cylinder 22 are arranged parallel to each other, and the insides thereof communicate with each other. Further, a distance L between centers c2 of the large conveyance paths TP2 is smaller than the inner diameter d2 of the large conveyance path TP2 (L < d2). Thus, when the pair of large conveyance paths TP2 are viewed in the axial direction of the screw 50, facing portions of the pair of large conveyance paths TP2 partially overlap each other, and the pair of large conveyance paths TP2 communicate with each other at the overlapping portions. Note that the inner diameter d2 of the large conveyance path TP2 is larger than the inner diameter d1 of the small conveyance path TP1 (d2 > d1).

Also, as illustrated in FIG. 3 and FIG. 4, when the small conveyance path TP1 and the large conveyance path TP2 are each viewed in the axial direction of the screw 50, the center c2 of the large conveyance path TP2 is offset by a distance t1 (≈ L/7) from the center c1 of the small conveyance path TP1 toward the side opposite to the installation floor FL1 (upper side in the drawing) .

### <Screw>

The pair of screws 50 each have the same shape. Also, the pair of screws 50 are arranged inside the pair of cylinders 21 and 22 (small conveyance paths TP1, large conveyance paths TP2), respectively. The pair of screws 50 have the function of conveying the resin raw material (resin pellets PR, molten resin MR) present in the small conveyance paths TP1 and the large conveyance paths TP2 of the pair of cylinders 21 and 22 from the upstream side to the downstream side while kneading it. Note that a distance L between rotation centers c3 of the pair of screws 50 is the same as the distance L between the centers c1 of the small conveyance paths TP1 and the distance L between the centers c2 of the large conveyance paths TP2.

As illustrated in FIG. 3 and FIG. 4, an outer diameter of the screw 50 (dashed line in the drawing) is a uniform outer diameter d3 over the entire longitudinal region of the screw 50. Further, the distance L between the rotation centers c3 of the pair of screws 50 is smaller than the outer diameter d3 of the screws 50 (L < d3). Thus, when the pair of screws 50 are viewed in the axial direction, the facing portions of the pair of screws 50 are meshed with each other. However, the pair of screws 50 do not interfere with each other and can each rotate smoothly.

Further, as illustrated in FIG. 3, a minute clearance CL (=(d1-d3)/2) is provided between the screws 50 and the small conveyance paths TP1 around the entire circumference of the screws 50. This minute clearance CL is on the order of a few millimeters, and is large enough to prevent the screw 50 from coming into contact with the small conveyance path TP1 even when a relatively large load (lateral force) is applied to the screw 50 when the extruder 10 is in operation. This allows the resin raw material (resin pellets PR, molten resin MR) present in the small conveyance paths TP1 to be efficiently conveyed toward the downstream side as the screws 50 rotate. Also, uneven wear of the screw 50 and the like caused by contact between the screw 50 and the small conveyance path TP1 can be suppressed.

Furthermore, as illustrated in FIG. 4, when the pair of screws 50 are viewed in the axial direction, the rotation centers c3 of the screws 50 are offset by the distance t1 toward the side of the installation floor FL1 (lower side in the drawing) relative to the centers c2 of the large conveyance paths TP2. Specifically, the rotation centers c3 of the pair of screws 50 are offset toward lower walls 21a and 22a that form the large conveyance paths TP2 of the pair of cylinders 21 and 22, respectively.

Also, a lower clearance CL1 is provided between the screws 50 and the lower walls 21a and 22a that form the large conveyance paths TP2. On the other hand, an upper clearance CL2 is provided between the screws 50 and upper walls 21b and 22b that form the large conveyance paths TP2 and are on the side opposite to the side where the lower walls 21a and 22a are provided. Further, the upper clearance CL2 is larger than the lower clearance CL1 (CL2 > CL1).

Here, the lower clearance CL1 is approximately the same size as the minute clearance CL (see FIG. 3) of the small conveyance paths TP1 (CL1 ≈ CL). Also, the upper clearance CL2 is approximately nine times the size of the lower clearance CL1 (CL2 ≈ 9 × CL1). This prevents the resin raw material (resin pellets PR, molten resin MR) from being stuck for a long period of time on the side of the installation floor FL1 of the large conveyance paths TP2, that is, on the lower side in the direction of gravity.

Note that the molten resin MR bulges out into the upper clearance CL2 of the large conveyance paths TP2 due to centrifugal force generated when the screws 50 rotate or the like. This makes it possible to slow down the conveying speed of the molten resin MR to the downstream side inside the large conveyance paths TP2. Therefore, it is possible to increase the residence time (reaction time) of the molten resin MR inside the large conveyance paths TP2 and improve the processing capacity.

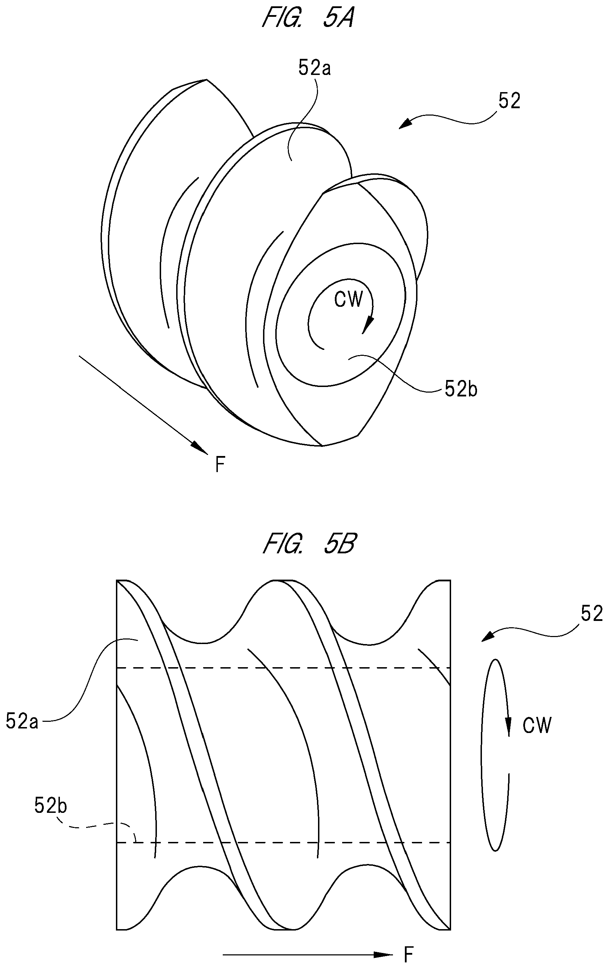

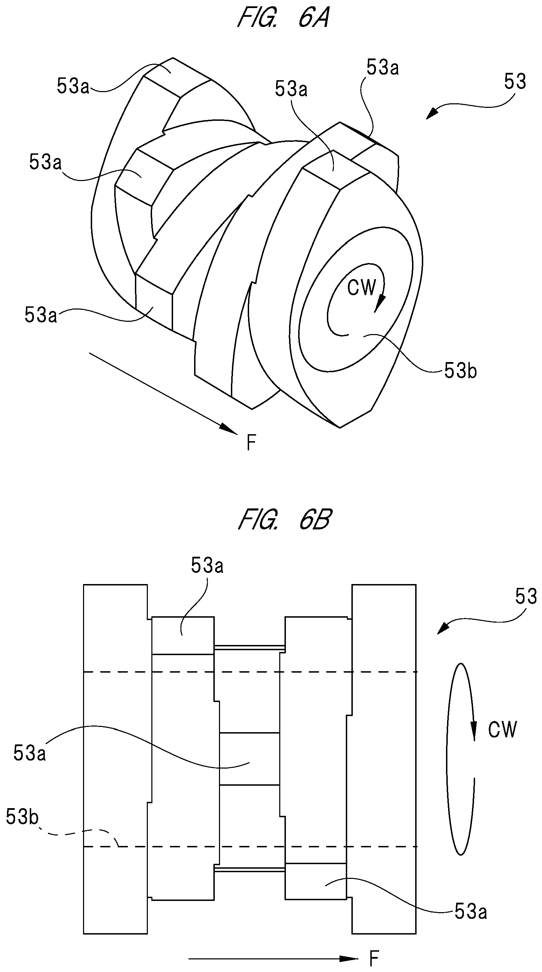

Also, as illustrated in FIG. 2, a long shaft 51 made of a solid round steel bar is provided at the rotation center of the screw 50. A plurality of screw elements are attached to the shaft 51 so as to be unable to rotate relative to each other. Specifically, a forward feed flight 52 (see FIG. 5A and FIG. 5B) and a forward feed kneading element 53 (see FIG. 6A and FIG. 6B) are attached to the shaft 51. The forward feed flight 52 and the forward feed kneading element 53 have the function of conveying the resin raw material (resin pellets PR, molten resin MR) from the upstream side to the downstream side while kneading it as the rotation shaft 41a of the electric motor 41 rotates in one direction.

Note that the number and arrangement of the forward feed flights 52 and forward feed kneading elements 53 attached to the shaft 51 can be set arbitrarily depending on the specifications required for the extruder 10 (such as the purpose of the melting and kneading process).

### <Forward Feed Flight>

The forward feed flight 52 forms a conveying section of the screw 50 and has a shape illustrated in FIG. 5A and FIG. 5B. Specifically, the forward feed flight 52 is formed into a righthanded screw shape with a helical thread 52a such that, when the rotation direction of the shaft 51 (see FIG. 2) is the clockwise direction indicated by an arrow CW in the drawing, the resin raw material (resin pellets PR, molten resin MR) moves in the direction indicated by an arrow F in the drawing (forward direction).

Also, a fixing hole 52b through which the shaft 51 is inserted is provided at the rotation center of the forward feed flight 52. The shaft 51 is serration-fitted into the fixing hole 52b so as to be able to transmit large torque. The main function of the forward feed flight 52 is to convey the resin raw material (resin pellets PR, molten resin MR) inside the pair of cylinders 21 and 22.

### <Forward Feed Kneading Element>

On the other hand, the forward feed kneading element 53 forms a kneading section of the screw 50 and has a shape illustrated in FIG. 6A and FIG. 6B. Specifically, the forward feed kneading element 53 is formed into a shape in which a plurality of angular portions 53a are arranged in a spiral shape such that, when the rotation direction of the shaft 51 is the clockwise direction indicated by an arrow CW in the drawing, the forward feed kneading element conveys the resin raw material (resin pellets PR, molten resin MR) in the direction of an arrow F in the drawing (forward direction) while kneading it.

In addition, a fixing hole 53b through which the shaft 51 is inserted is provided at the rotation center of the forward feed kneading element 53. The shaft 51 is serration-fitted also into the fixing hole 53b so as to be able to transmit large torque. The main function of the forward feed kneading element 53 is to knead the resin raw material (resin pellets PR, molten resin MR) inside the pair of cylinders 21 and 22.

### <Supply Region>

As illustrated in FIG. 2, the supply region (first region) AR1 where the resin pellets PR supplied to the inside of the pair of cylinders 21 and 22 are supplied to the downstream side of the cylinder unit CU is provided on the upstream side of the cylinder unit CU, that is, on the side of the hopper 23. Namely, the pair of cylinders 21 and 22 include the supply region AR1, and the hopper 23 for feeding the resin pellets PR into the pair of cylinders 21 and 22 is provided in the supply region AR1. Specifically, the supply region AR1 is made up of the small block BL1 which is an entrance block and the small block BL2. In addition, the screw 50 located in the supply region AR1 includes a total of four forward feed flights 52.

Therefore, the resin pellets PR supplied to the inside of the pair of cylinders 21 and 22 (small conveyance paths TP1) are conveyed from the supply region AR1 toward the kneading region AR2 as the pair of screws 50 rotate. At this time, since the heater HT is provided only in the small block BL2, the resin pellets PR are not completely melted. In other words, in the supply region AR1, the resin pellets PR are just softened (get soft).

Then, the resin pellets PR that has passed through the supply region AR1 by the rotation of the pair of screws 50 reach the kneading region AR2 smoothly through the conversion adapter 28.

### <Kneading Region>

The kneading region (second region) AR2 where the resin pellets PR are kneaded while being melted and the kneaded molten resin MR is conveyed to the downstream side of the cylinder unit CU is provided on the downstream side of the supply region AR1. Namely, the pair of cylinders 21 and 22 include the kneading region AR2, and the kneading region AR2 occupies approximately half of the cylinder unit CU. Specifically, the kneading region AR2 is made up of a total of four large blocks BL3 to BL6. Also, the screw 50 located in the kneading region AR2 includes three sets of six forward feed kneading elements 53 and three forward feed flights 52.

Thus, the resin pellets PR supplied from the supply region AR1 are kneaded while being melted inside the kneading region AR2 (large conveyance paths TP2) as the pair of screws 50 rotate. At this time, since the heaters HT are attached to all of the large blocks BL3 to BL6, the resin pellets PR can be reliably melted. In addition, since more than half of the screw elements in the range of the kneading region AR2 are the forward feed kneading elements 53, the molten resin MR can be sufficiently kneaded.

Furthermore, the molten resin MR that has been melted and kneaded in the kneading region AR2 bulges out into the upper clearance CL2 (see FIG. 4) formed on the side of the upper walls 21b and 22b that form the inside of the large conveyance paths TP2 due to centrifugal force and others generated when the pair of screws 50 rotate. This slows down the conveying speed of the molten resin MR to the downstream side inside the large conveyance paths TP2. As a result, it is possible to increase the residence time of the molten resin MR inside the large conveyance paths TP2 and improve the processing capacity.

### <Metering Region>

A metering region (third region) AR3 where the molten resin MR which has been melted and kneaded is homogenized is provided adjacent to the downstream side of the kneading region AR2 via the conversion adopter 29. In this way, the pair of cylinders 21 and 22 include the metering region AR3. Note that the metering region AR3 is made up of the two small blocks BL7 and BL8, and the inner cross-sectional area S1 of the metering region AR3 (small conveyance paths TP1) is equal to the inner cross-sectional area S1 of the supply region AR1 (small conveyance paths TP1) (see FIG. 3). In other words, the cross-sectional area of the cylinders 21 and 22 perpendicular to the direction from the supply region AR1 to the kneading region AR2 is larger in the kneading region AR2 (large conveyance paths TP2) with the cross-sectional S2 than in the supply region AR1 (small conveyance paths TP1) and the metering region AR3 (small conveyance paths TP1) with the cross-sectional area S1. In addition, the screw 50 located inside the metering region AR3 includes a total of five forward feed flights 52.

Thus, the molten resin MR supplied from the kneading region AR2 is conveyed in a molten state to the downstream side of the metering region AR3 as the pair of screws 50 rotate. At this time, since the heaters HT are attached to both the small blocks BL7 and BL8, the molten state of the molten resin MR is reliably maintained. Therefore, the homogenized molten resin MR reaches the small block BL9 which is the exit block in a stable state without generating pulsation or the like.

### <Discharge Region>

A discharge region AR4 made up of the small block BL9 (exit block) is provided on the downstream side of the metering region AR3. In this way, the pair of cylinders 21 and 22 include the discharge region AR4. Further, the molten resin MR supplied to the discharge region AR4 by the rotation of the pair of screws 50 is discharged to the outside of the cylinder unit CU through the molten resin discharge port 27. Namely, the molten resin discharge port 27 configured to discharge the molten resin MR after kneading is connected to the kneading region AR2 via the metering region AR3 and the discharge region AR4. Thereafter, the molten resin MR passes through the conveyance pipe P to reach the processing apparatus (not illustrate) of the next process.

### <Comparison of Processing Capability between First Embodiment and Comparative Example>

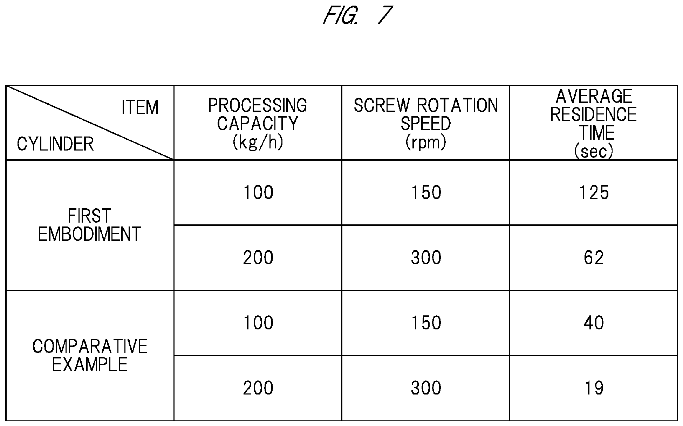

Next, in the extruder 10 of the first embodiment, that is, the extruder in which the cross-sectional area S2 of the large conveyance path TP2 in the kneading region AR2 was larger than the cross-sectional area S1 of the small conveyance path TP1 in the supply region AR1 and the metering region AR3 (S2 > S1), the residence time of the resin raw material (resin pellets PR, molten resin MR) passing through the inside of the cylinder unit CU was measured to investigate the processing capacity. FIG. 7 illustrates the results thereof.

As to the numerical values such as the size of the extruder 10 in the first embodiment, with reference to FIG. 4, the outer diameter d3 of the screw 50 was "47 mm," the inner diameter d2 of the large conveyance path TP2 of the large blocks BL3 to BL6 was "69 mm," and the offset (distance t1) of the rotation center c3 of the screw 50 relative to the center c2 of the large conveyance path TP2 toward the side of the installation floor FL1 (lower side in the drawing) was "11 mm."

Also, the number and arrangement of the other small blocks BL1, BL2, and BL7 to BL9, the number and arrangement of the large blocks BL3 to BL6, and the configuration of the screws 50 (type, number, and arrangement of the screw elements) were the same as those illustrated in FIG. 2.

Furthermore, as the resin raw material (resin pellets PR, molten resin MR) used in the measurements, polypropylene with a metal flow rate (MFR) of 10 mixed with a small amount of carbon black master batch for easier measurement of the residence time was used. Then, a timer was started when the master batch was supplied to the cylinder unit CU, and stopped when the black molten resin MR was discharged from the molten resin discharge port 27, thereby measuring the time it took for the resin raw material to pass through the inside of the cylinder unit CU, that is, the residence time.

As a result, in the first embodiment, when the rotation speed of the pair of screws 50 was set to "150 rpm," the discharge amount of resin raw material per unit time was set to "100 kg/h," and measurements were performed multiple times under the same conditions, the average residence time was "125 sec." Further, when the rotation speed of the pair of screws 50 was doubled to "300 rpm," the discharge amount of resin raw material per unit time was set to "200 kg/h," and measurements were performed multiple times under the same conditions, the average residence time was "62 sec."

On the other hand, the comparative example used an extruder (not illustrated) that was similar in size to the extruder 10 of the first embodiment and included the small conveyance path TP1 with the cross-sectional area S1 over the entire cylinder unit CU. In other words, the extruder of the comparative example was not provided with the large conveyance path TP2 (large blocks BL3 to BL6) .

As a result, in the comparative example, when the rotation speed of the pair of screws 50 was set to "150 rpm" and the discharge amount of resin raw material per unit time was set to "100 kg/h" so as to have the same operating conditions as in the first embodiment, and measurements were performed multiple times under the same conditions, the average residence time was "40 sec." Also, when the rotation speed of the pair of screws 50 was doubled to "300 rpm" and the discharge amount of resin raw material per unit time was set to "200 kg/h," as in the first embodiment, and measurements were performed multiple times under the same conditions, the average residence time was "19 sec."

As described above, it was confirmed that, in the first embodiment, the residence time of the resin raw material (resin pellets PR, molten resin MR) inside the cylinder unit CU could be approximately "three times" longer than that in the comparative example. Consequently, if the amount of resin raw material discharged per unit time is kept the same, the residence time of the resin raw material can be increased without increasing the size of the extruder 10, that is, without lengthening the pair of cylinders 21 and 22 and the screws 50 and increasing the diameter of the pair of cylinders 21 and 22 and the screws 50. Therefore, in the extruder 10 of the first embodiment, it is possible to easily handle a resin raw material that requires a longer residence time and improve the processing capacity.

Here, the inner diameter d2 of the large conveyance path TP2 relative to the outer diameter d3 of the screw 50 must not be too large. Specifically, it is desirable that the inner diameter d2 of the large conveyance path TP2 is "2 to 3 times" the outer diameter d3 of the screw 50. If it is made larger than this (for example, 10 times), the resin raw material (resin pellets PR, molten resin MR) will have difficulty flowing inside the cylinder unit CU, so that the resin raw material will become stuck in the upper clearance CL2 (see FIG. 4) of the large conveyance path TP2 and will not be discharged. As a result, it will become necessary to frequently perform maintenance work to remove the resin raw material that is stuck in the upper clearance CL2.

As described above in detail, according to the extruder 10 of the first embodiment, the inner cross-sectional area of the pair of cylinders 21 and 22 in the direction perpendicular to the direction from the supply region AR1 to the kneading region AR2 is larger in the kneading region AR2 (cross-sectional area S2) than in the supply region AR1 (cross-sectional area S1) (S2 > S1).

As a result, it is possible to increase the residence time of the resin raw material (resin pellets PR, molten resin MR) and improve the processing capacity without increasing the size of the extruder 10, that is, without lengthening the pair of cylinders 21 and 22 and the screws 50 and increasing the diameter of the pair of cylinders 21 and 22 and the screws 50. As a result, it is possible to easily handle the resin raw material that requires a longer residence time, and it becomes possible to use the extruder 10 for a wide range of melting and kneading applications.

### <Second Embodiment>

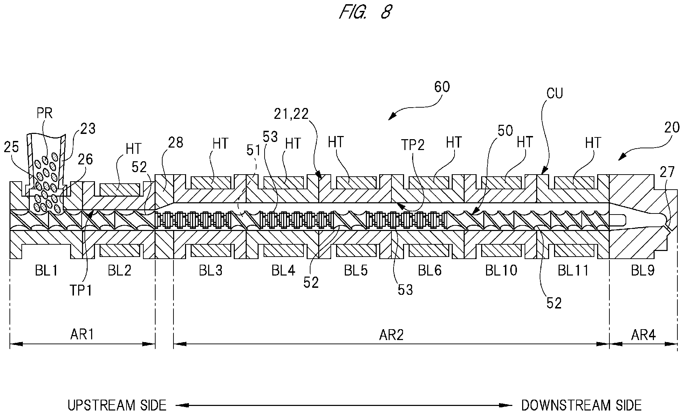

As illustrated in FIG. 8, an extruder 60 of the second embodiment differs from the extruder 10 of the first embodiment (see FIG. 2) only in that it does not include the metering region AR3. In exchange for this, the range of the kneading region AR2 is lengthened in the extruder 60 of the second embodiment.

Specifically, in the extruder 60 of the second embodiment, large blocks BL10 and BL11 are adopted instead of the small blocks BL7 and BL8 that form the metering region AR3 of the extruder 10 of the first embodiment, and the conversion adapter 29 (see FIG. 2) is omitted. Specifically, from the upstream side to the downstream side of the cylinder unit CU, the small blocks BL1 and BL2, the large blocks BL3 to BL6, BL10, and BL11, and the small block BL9 are arranged in this order.

Note that the newly added large blocks BL10 and BL11 have the same shape and structure as the large blocks BL3 to BL6.

The extruder 60 of the second embodiment configured as described above can also achieve substantially the same effects as the extruder 10 of the first embodiment described above. In addition, since the range of the kneading region AR2 can be lengthened in the extruder 60 of the second embodiment, it is possible to increase the residence time of the resin raw material (resin pellets PR, molten resin MR) and further improve the processing capacity.

In FIG. 8, a total of five forward feed flights 52 are arranged on the downstream side of the pair of screws 50, but some or all of the total of five forward feed flights 52 can be changed to forward feed kneading elements 53 depending on the purpose of the melting and kneading process and others.

### <Third Embodiment>

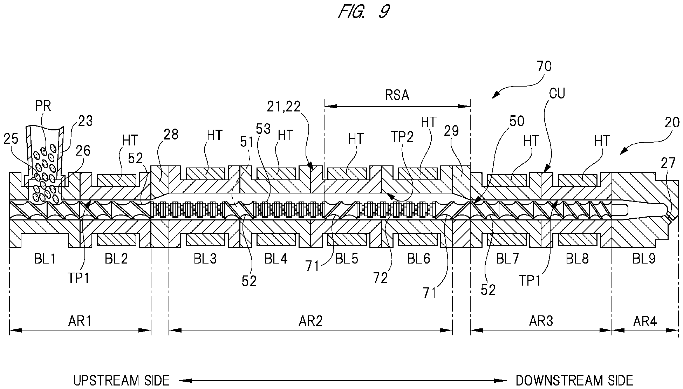

As illustrated in FIG. 9, an extruder 70 of the third embodiment differs from the extruder 10 of the first embodiment (see FIG. 2) only in the shapes of some screw elements of the plurality of screw elements that form the pair of screws 50.

Specifically, a backward feed flight 71 and backward feed kneading element 72 are arranged at the positions located on the downstream side of the kneading region AR2 of the pair of screws 50. Specifically, the kneading section located in the kneading region AR2 includes a backward feed kneading element. In addition, in the longitudinal direction of the cylinder unit CU, a pair of backward feed flights 71 and six backward feed kneading elements 72 are provided over the part of the large blocks BL5 and BL6 and the conversion adapter 29. In a region RSA where these backward feed flights 71 and the backward feed kneading elements 72 are arranged, the six backward feed kneading elements 72 are arranged so as to be sandwiched between the pair of backward feed flights 71.

### <Backward Feed Flight>

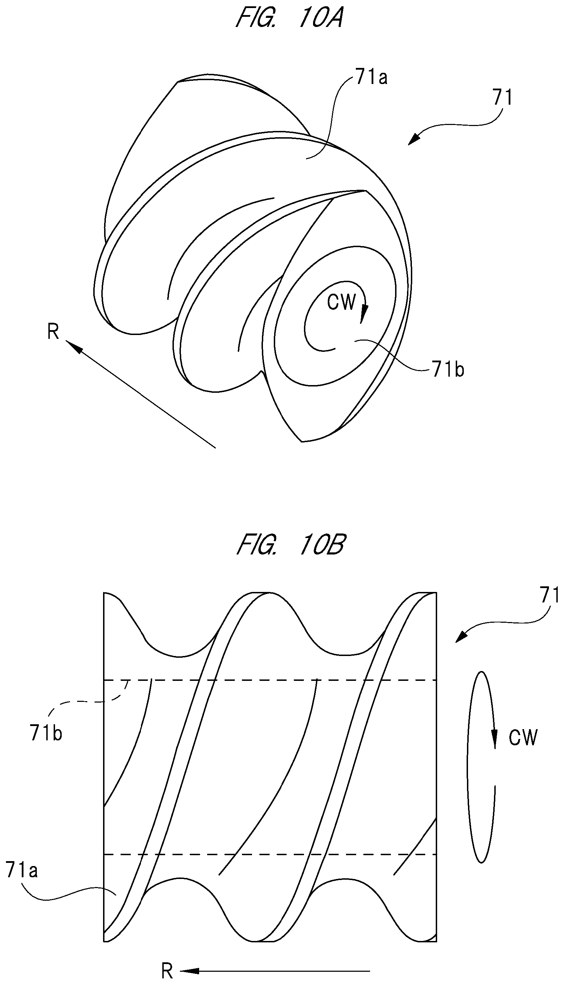

As illustrated in FIG. 10A and FIG. 10B, the backward feed flight 71 has a similar shape to the forward feed flight 52 of the first embodiment (see FIG. 5A and FIG. 5B), but while the forward feed flight 52 conveys the resin raw material (resin pellets PR, molten resin MR) in the forward direction (in the direction from the upstream side to the downstream side), the backward feed flight 71 conveys the resin raw material in the backward direction (in the direction from the downstream side to the upstream side).

Specifically, the backward feed flight 71 is formed into a reverse screw shape with a helical thread 71a such that, when the rotation direction of the shaft 51 (see FIG. 2) is the clockwise direction indicated by an arrow CW in the drawing, the resin raw material moves in the direction indicated by an arrow R in the drawing (backward direction). In addition, a fixing hole 71b through which the shaft 51 is inserted is provided at the rotation center of the backward feed flight 71, and the shaft 51 is serration-fitted into the fixing hole 71b.

### <Backward Feed Kneading Element>

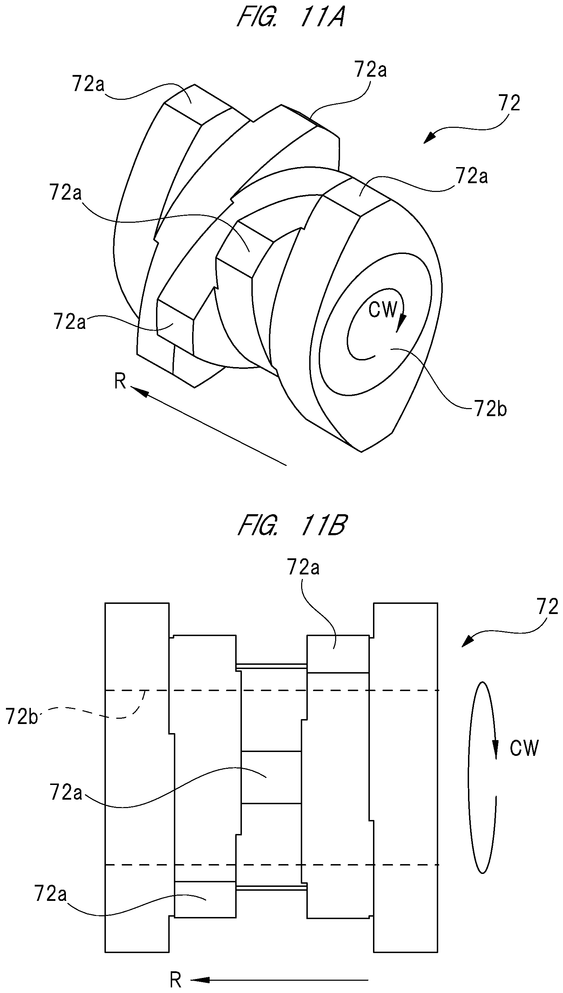

As illustrated in FIG. 11A and FIG. 11B, the backward feed kneading element 72 has a similar shape to the forward feed kneading element 53 of the first embodiment (see FIG. 6A and FIG. 6B), but while the forward feed kneading element 53 conveys the resin raw material (resin pellets PR, molten resin MR) in the forward direction (in the direction from the upstream side to the downstream side), the backward feed kneading element 72 conveys the resin raw material in the backward direction (in the direction from the downstream side to the upstream side).

Specifically, the backward feed kneading element 72 is formed into a shape in which a plurality of angular portions 72a are arranged in a spiral shape such that, when the rotation direction of the shaft 51 is the clockwise direction indicated by an arrow CW in the drawing, the backward feed kneading element conveys the resin raw material in the direction of an arrow R in the drawing (backward direction) while kneading it. In addition, a fixing hole 72b through which the shaft 51 is inserted is provided at the rotation center of the backward feed kneading element 72, and the shaft 51 is serration-fitted into the fixing hole 72b.

The extruder 70 of the third embodiment configured as described above can also achieve substantially the same effects as the extruder 10 of the first embodiment described above. In addition, the extruder 70 of the third embodiment includes the backward feed flight 71 and the backward feed kneading element 72, which send the resin raw material (resin pellets PR, molten resin MR) in the backward direction relative to the forward direction from the supply region AR1 to the kneading region AR2, in the part located on the downstream side of the kneading region AR2 of the pair of screws 50. Therefore, it is possible to further increase the residence time of the resin raw material in the kneading region AR2 and further improve the processing capacity.

Although both the backward feed flight 71 and the backward feed kneading element 72 are arranged in FIG. 9, for example, the backward feed flight 71 may be omitted and only the backward feed kneading element 72 may be provided depending on the purpose of the melting and kneading process and others.

Furthermore, in order to finely adjust the residence time of the resin raw material in the kneading region AR2, for example, a neutral kneading element (not illustrated) can be used instead of the backward feed kneading element 72 in FIG. 9. Here, the neutral kneading element refers to an element for only kneading of the resin raw material without feeding it forward and backward. In other words, the neutral kneading element is not a kneading section having the conveying capacity.

### <Fourth Embodiment>

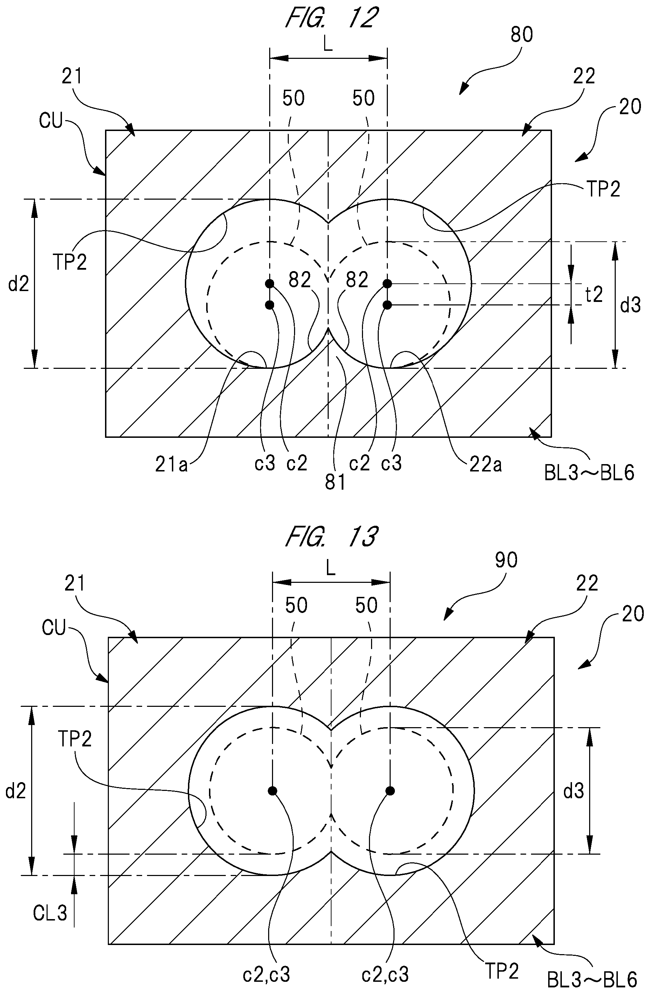

As illustrated in FIG. 12, an extruder 80 of the fourth embodiment differs from the extruder 10 of the first embodiment (see FIG. 4) only in that almost all the lower clearance CL1 is eliminated and the shape of the large conveyance paths TP2 of the pair of cylinders 21 and 22 that form the large blocks BL3 to BL6 is changed.

Specifically, the rotation centers c3 of the pair of screws 50 are offset by a distance t2 (t2 > t1) from the centers c2 of the pair of cylinders 21 and 22 (the pair of large conveyance paths TP2) toward the lower walls 21a and 22a of the pair of cylinders 21 and 22, thereby making the lower clearance CL1 "almost zero."

In addition, a convex portion 81 that enters between the pair of adjacent screws 50 is provided between the lower walls 21a and 22a that form the large conveyance paths TP2 of the large blocks BL3 to BL6. Further, arc portions 82 that follow the outer shapes of the screws 50 are provided at portions of the convex portion 81 that face the pair of screws 50 (two locations in total). Note that the radius of the arc portion 82 is made approximately the same as the radius of the screw 50.

The extruder 80 of the fourth embodiment configured as described above can also achieve substantially the same effects as the extruder 10 of the first embodiment described above. In addition, in the extruder 80 of the fourth embodiment, the convex portion 81 having a pair of arc portions 82 can support the facing portions of the pair of screws 50, so that the pair of screws 50 can be prevented from approaching each other and interfering with each other even if a relatively large load (lateral force) is applied to the pair of screws 50.

### <Fifth Embodiment>

As illustrated in FIG. 13, an extruder 90 of the fifth embodiment differs from the extruder 10 of the first embodiment (see FIG. 4) only in that the rotation centers c3 of the pair of screws 50 coincide with the centers c2 of the pair of cylinders 21 and 22 (the pair of large conveyance paths TP2) when the kneading region AR2 (see FIG. 2) is viewed in the axial direction of the pair of screws 50. Thus, a relatively large clearance CL3 (=(d2-d3)/2) is formed between the screw 50 and the large conveyance path TP2 around the entire circumference of the screw 50.

The extruder 90 of the fifth embodiment configured as described above can also achieve substantially the same effects as the extruder 10 of the first embodiment described above. In addition, since the relatively large clearance CL3 is formed around the entire circumference of the pair of screws 50 within the range of the kneading region AR2 in the extruder 90 of the fifth embodiment, the pair of screws 50 can be reliably prevented from interfering with the large conveyance paths TP2 even if a relatively large load (lateral force) is applied to the pair of screws 50.

### <Sixth Embodiment>

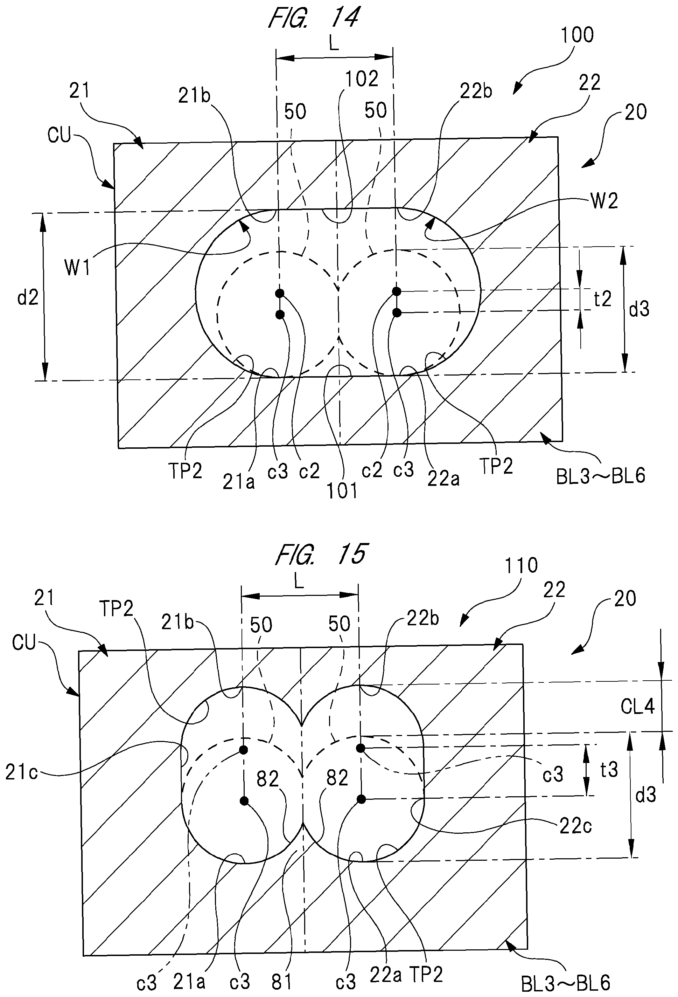

As illustrated in FIG. 14, an extruder 100 of the sixth embodiment differs from the extruder 10 of the first embodiment (see FIG. 4) in that almost all the lower clearance CL1 is eliminated as in the fourth embodiment (see FIG. 12) and a lower straight portion (straight portion) 101 and an upper straight portion (straight portion) 102 are provided between the pair of adjacent cylinders 21 and 22.

In other words, the lower straight portion 101 is arranged on the side of the lower walls 21a and 22a, and the upper straight portion 102 is arranged on the side of the upper walls 21b and 22b. More specifically, the lower straight portion 101 and the upper straight portion 102 are straight portions that connect an arc-shaped inner wall W1 that forms one cylinder 21 and an arc-shaped inner wall W2 that forms the other cylinder 22 with tangents to each other, so that the cross-sectional shape of the pair of large conveyance paths TP2 is a substantially oval shape as illustrated in FIG. 14.

The extruder 100 of the sixth embodiment configured as described above can also achieve substantially the same effects as the extruder 10 of the first embodiment described above. In addition, since the extruder 100 of the sixth embodiment does not have a convex portion that protrudes toward between the pair of screws 50, the inner cross-sectional area of the kneading region AR2 (the pair of large conveyance paths TP2) can be made larger, so that it is possible to further increase the residence time of the resin raw material (resin pellets PR, molten resin MR) and further improve the processing capacity.

### <Seventh Embodiment>

As illustrated in FIG. 15, an extruder 110 of the seventh embodiment differs from the extruder 80 of the fourth embodiment (see FIG. 12) in that side wall portions 21c and 22c capable of supporting the opposite sides (left and right sides in the drawing) of the facing side of the pair of screws 50 are provided in the pair of adjacent cylinders 21 and 22. Also, the extruder 110 of the seventh embodiment differs in that the cross-sectional shape of the pair of large conveyance paths TP2 is changed to the shape in which the pair of screws 50 are moved toward the upper walls 21b and 22b by a distance t3 (t3 > t2) and the pair of screws 50 can rotate relative to each other in that state.

Thus, a relatively large upper clearance CL4 (CL4 > CL2) is secured. In addition, the clearance between the pair of screws 50 and the side wall portions 21c and 22c is "almost zero."

The extruder 110 of the seventh embodiment configured as described above can also achieve substantially the same effects as the extruder 80 of the fourth embodiment described above. In addition, in the extruder 110 of the seventh embodiment, the side wall portions 21c and 22c capable of supporting the opposite sides of the facing side of the adjacent screws 50 are provided in the pair of cylinders 21 and 22, so that the pair of screws 50 can be prevented from swinging in the direction of approaching and separating from each other inside the pair of large conveyance paths TP2.

### <Eighth Embodiment>

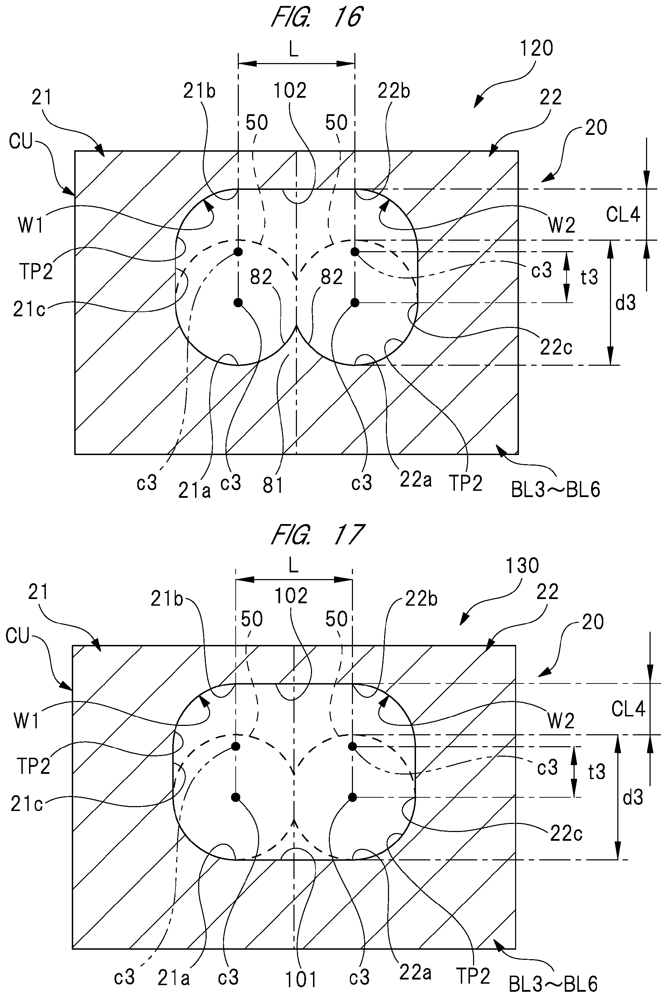

As illustrated in FIG. 16, an extruder 120 of the eighth embodiment differs from the extruder 110 of the seventh embodiment (see FIG. 15) in that the upper straight portion (straight portion) 102 is provided between the pair of adjacent cylinders 21 and 22 as in the sixth embodiment (see FIG. 14).

Specifically, the upper straight portion 102 is a straight portion that is provided on the upper walls 21b and 22b that form the pair of cylinders 21 and 22 and connects the arc-shaped inner wall W1 that forms one cylinder 21 and the arc-shaped inner wall W2 that forms the other cylinder 22 with a tangent to each other.

The extruder 120 of the eighth embodiment configured as described above can also achieve substantially the same effects as the extruder 110 of the seventh embodiment described above. In addition, since the convex portion of the upper walls 21b and 22b is eliminated and the upper straight portion 102 is provided instead in the extruder 120 of the eighth embodiment, the inner cross-sectional area of the kneading region AR2 (the pair of large conveyance paths TP2) can be made larger, so that it is possible to further increase the residence time of the resin raw material (resin pellets PR, molten resin MR) and further improve the processing capacity.

### <Ninth Embodiment>

As illustrated in FIG. 17, an extruder 130 of the ninth embodiment differs from the extruder 120 of the eighth embodiment (see FIG. 16) only in that the convex portion 81 of the lower walls 21a and 22a is omitted and the lower straight portion 101 is provided as in the sixth embodiment (see FIG. 14).

Specifically, the lower straight portion 101 is a straight portion that is provided on the lower walls 21a and 22a that form the pair of cylinders 21 and 22 and connects the arc-shaped inner wall W1 that forms one cylinder 21 and the arc-shaped inner wall W2 that forms the other cylinder 22 with a tangent to each other.

The extruder 130 of the ninth embodiment configured as described above can also achieve substantially the same effects as the extruder 120 of the eighth embodiment described above. In addition, since the convex portion of the lower walls 21a and 22a is eliminated and the lower straight portion 101 is provided instead in the extruder 130 of the ninth embodiment, the inner cross-sectional area of the kneading region AR2 (the pair of large conveyance paths TP2) can be made larger, so that it is possible to further increase the residence time of the resin raw material (resin pellets PR, molten resin MR) and improve the processing capacity.

### <Tenth Embodiment>

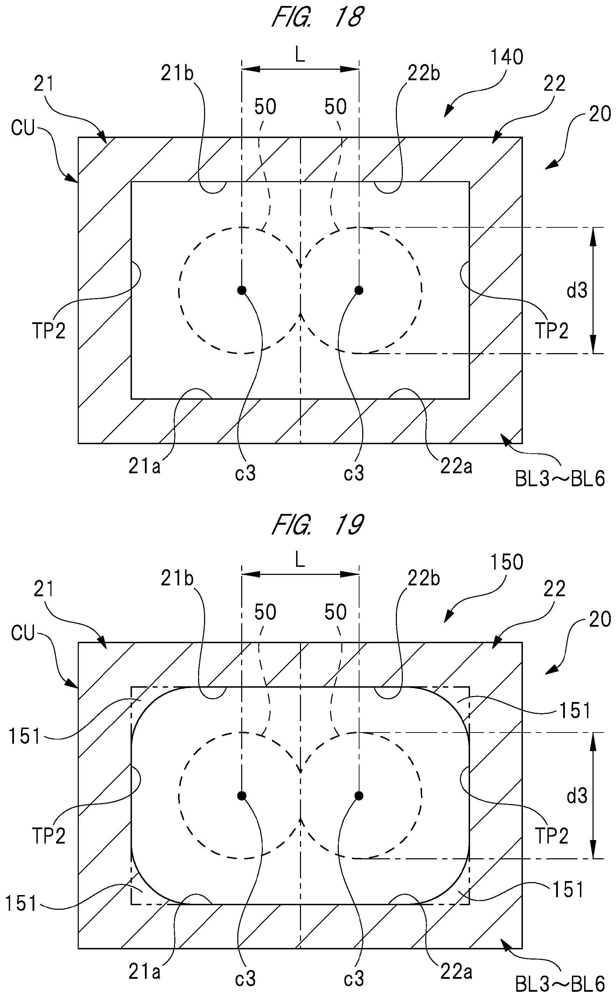

As illustrated in FIG. 18, an extruder 140 of the tenth embodiment differs from the extruder 10 of the first embodiment (see FIG. 2) only in that the internal shape of the pair of cylinders 21 and 22 is rectangular. Specifically, when the kneading region AR2 (the pair of large conveyance paths TP2) is viewed in the axial direction of the pair of screws 50, the shape formed by butting the pair of large conveyance paths TP2 inside the pair of cylinders 21 and 22 is approximately rectangular. Note that a sufficient clearance is secured around the pair of screws 50.

The extruder 140 of the tenth embodiment configured as described above can also achieve substantially the same effects as the extruder 10 of the first embodiment described above. In addition, since the internal shape of the pair of cylinders 21 and 22 is rectangular in the extruder 140 of the tenth embodiment, the pair of cylinders 21 and 22 can be easily formed by pressing thick steel plates or the like.

### <Eleventh Embodiment>

As illustrated in FIG. 19, an extruder 150 of the eleventh embodiment differs from the extruder 140 of the tenth embodiment (see FIG. 18) in that arc-shaped connection portions 151 each having a predetermined radius are integrally provided at the internal corners (four locations in total) of the pair of cylinders 21 and 22.

The extruder 150 of the eleventh embodiment configured as described above can also achieve substantially the same effects as the extruder 140 of the tenth embodiment described above. In addition, in the extruder 150 of the eleventh embodiment, the arc-shaped connection portions 151 are integrally provided at the internal corners of the pair of cylinders 21 and 22, respectively, so that the concentration of stress at the internal corners of the pair of cylinders 21 and 22 is suppressed. Therefore, it is possible to effectively suppress the occurrence of cracks or the like at the internal corners of the pair of cylinders 21 and 22.

### <Twelfth Embodiment>

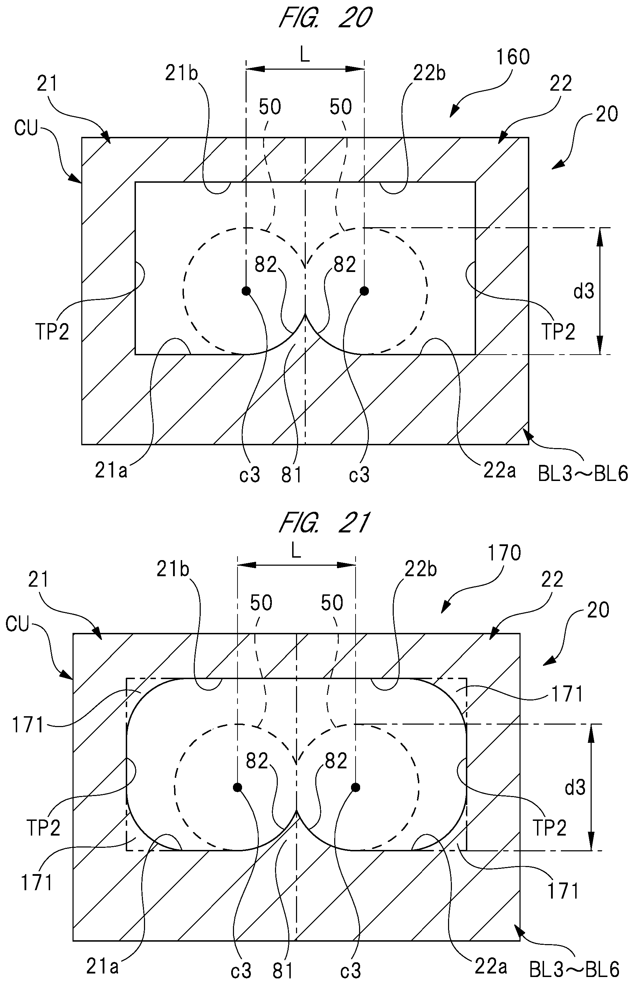

As illustrated in FIG. 20, an extruder 160 of the twelfth embodiment differs from the extruder 140 of the tenth embodiment (see FIG. 18) in that the convex portion 81 that enters between the pair of adjacent screws 50 is provided on the lower walls 21a and 22a that form the pair of cylinders 21 and 22 (inside of the pair of large conveyance paths TP2) as in the fourth embodiment (see FIG. 12). Note that the radius of the pair of arc portions 82 that form the convex portion 81 is approximately the same as the radius of the screw 50.

The extruder 160 of the twelfth embodiment configured as described above can also achieve substantially the same effects as the extruder 80 of the fourth embodiment described above.

### <Thirteenth Embodiment>

As illustrated in FIG. 21, an extruder 170 of the thirteenth embodiment differs from the extruder 160 of the twelfth embodiment (see FIG. 20) in that arc-shaped connection portions 171 each having a predetermined radius are integrally provided at the internal corners of the pair of cylinders 21 and 22 as in the extruder 150 of the eleventh embodiment (FIG. 19).

The extruder 170 of the thirteenth embodiment configured as described above can also achieve substantially the same effects as the extruders 150 and 160 of the eleventh and twelfth embodiments described above.

### <Fourteenth Embodiment>

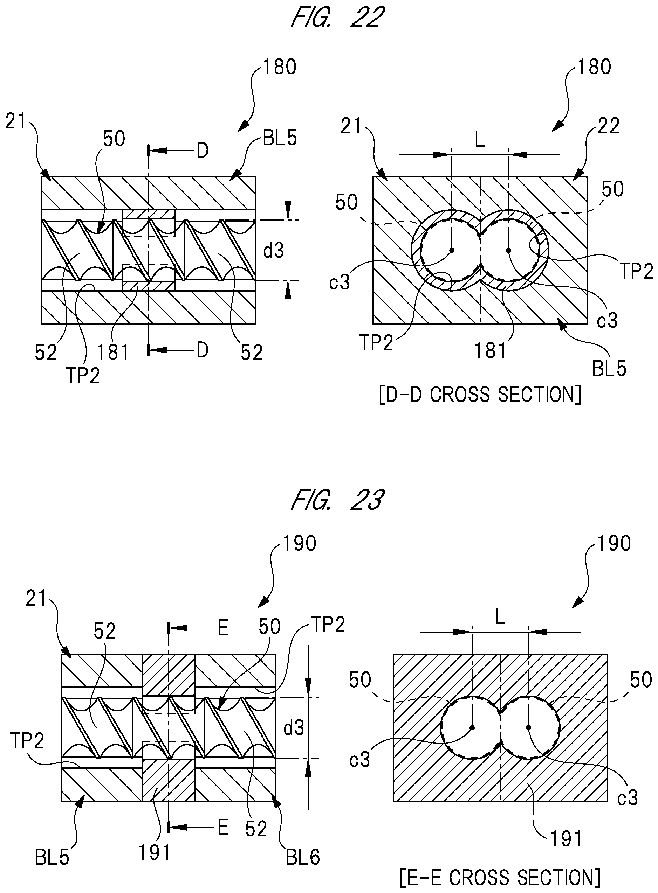

As illustrated in FIG. 22, an extruder 180 of the fourteenth embodiment differs from the extruder 90 of the fifth embodiment (see FIG. 13) in that a rotational vibration suppression member 181 for suppressing the rotational vibration of the pair of screws 50 is provided inside the pair of cylinders 21 and 22 (the pair of large conveyance paths TP2).

Specifically, the rotational vibration suppression member 181 is provided inside the large block BL5, and is formed in a substantially eyeglass shape when viewed in the axial direction of the pair of screws 50. The outer peripheral portion of the rotational vibration suppression member 181 is fitted into the inner walls of the pair of cylinders 21 and 22. Further, the rotational vibration suppression member 181 has a certain degree of thickness, and the pair of screws 50 are freely rotatably arranged on the inner peripheral portion of the rotational vibration suppression member 181 with the clearance being "almost zero."

The extruder 180 of the fourteenth embodiment configured as described above can also achieve substantially the same effects as the extruder 90 of the fifth embodiment described above. In addition, since the extruder 180 of the fourteenth embodiment includes the rotational vibration suppression member 181 configured to suppress rotational vibration of the pair of screws 50 located in the kneading region AR2 (see FIG. 2), it is possible to suppress the pair of screws 50 from warping inside the pair of large conveyance paths TP2. This makes it possible to prevent the pair of screws 50 from interfering with each other and colliding with the pair of large conveyance paths TP2.

In addition to the configuration in which one rotational vibration suppression member 181 is provided in the large block BL5, the configuration in which additional rotational vibration suppression members 181 are provided in other large blocks is also possible. In this case, it is possible to suppress the occurrence of rotational vibration over almost the entire region of the pair of screws 50, and obtain the stable rotation of the pair of screws 50.

### <Fifteenth Embodiment>

As illustrated in FIG. 23, an extruder 190 of the fifteenth embodiment differs from the extruder 180 of the fourteenth embodiment (see FIG. 22) in that a block-shaped rotational vibration suppression member 191 is provided so as to be sandwiched between the large block BL5 and the large block BL6.

Specifically, the rotational vibration suppression member 191 is formed to have a cross-sectional shape that is substantially the same as that of the pair of cylinders 21 and 22 when viewed in the axial direction of the pair of screws 50. In addition, the pair of screws 50 are freely rotatably arranged on the inner peripheral portion of the rotational vibration suppression member 191 with the clearance being "almost zero."

The extruder 190 of the fifteenth embodiment configured as described above can also achieve substantially the same effects as the extruder 180 of the fourteenth embodiment described above. In addition, as compared with the fourteenth embodiment, the extruder 190 of the fifteenth embodiment can improve assembly workability because it is only necessary to sandwich the rotational vibration suppression member 191 between the adjacent large blocks BL5 and BL6 when assembling the cylinder unit CU (see FIG. 2).

In addition to the configuration in which one rotational vibration suppression member 191 is provided between the large blocks BL5 and BL6, the configuration in which additional rotational vibration suppression members 191 are provided between other large blocks is also possible.

### <Sixteenth Embodiment>

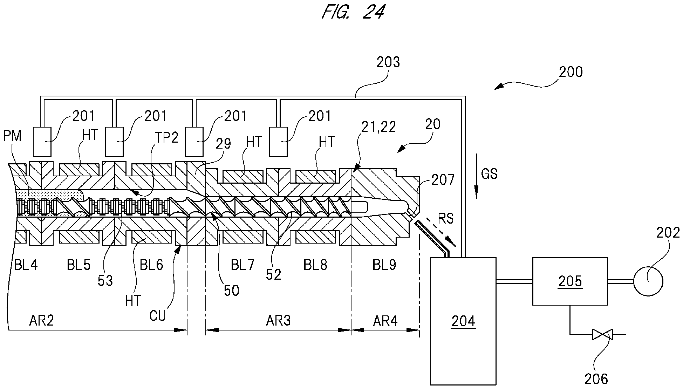

As illustrated in FIG. 24, an extruder 200 of the sixteenth embodiment has substantially the same basic structure as the extruder 10 of the first embodiment (see FIG. 1 and FIG. 2), but has a different application. The extruder 200 is an extruder used in a pyrolysis system, and has the function of pyrolyzing a resin raw material (polymer) PM inside the cylinder unit CU and separating it into a pyrolysis gas GS (solid line arrow in the drawing) and a residue RS (dashed line arrow in the drawing).

Specifically, a plurality of vent ports 201 (four in this embodiment) are provided on the outer periphery of the cylinder unit CU, and these vent ports 201 collect the pyrolysis gas GS. Then, by the operation of a vacuum pump 202, the pyrolysis gas GS enters a residue tank 204 from the vent ports 201 through a gas pipe 203. Thereafter, the pyrolysis gas GS inside the residue tank 204 is cooled into liquid monomer (not illustrated), and stored in a monomer tank 205.

Note that the residue tank 204 is connected on the upstream side (left side in the drawing) of the monomer tank 205, and the vacuum pump 202 is connected on the downstream side (right side in the drawing) of the monomer tank 205. In addition, a takeoff cock 206 is provided on the lower side of the monomer tank 205, and the liquid monomer stored in the monomer tank 205 can be taken out from the takeoff cock 206.

Meanwhile, the residue RS (solid line arrow in the drawing) that has been kneaded while being melted inside the cylinder unit CU enters the residue tank 204 through a residue discharge port (discharge port) 207 provided in the small block BL9 (the pair of cylinders 21 and 22). Specifically, the residue discharge port 207 for discharging the residue RS after pyrolysis is connected to the kneading region AR2 via the metering region AR3 and the discharge region AR4. Note that the residue discharge port 207 has the function of discharging the residue RS generated after pyrolyzing the resin raw material (polymer) PM to the outside of the pair of cylinders 21 and 22. Also, the residue RS is a softened solid, and is stored on the lower side of the residue tank 204.

The extruder 200 of the sixteenth embodiment configured as described above can also achieve substantially the same effects as the extruder 10 of the first embodiment described above. Specifically, since the residence time of the resin raw material (polymer) PM inside the cylinder unit CU can be increased, it is possible to sufficiently pyrolyze the resin raw material and further improve the processing capacity.

### <Seventeenth Embodiment>

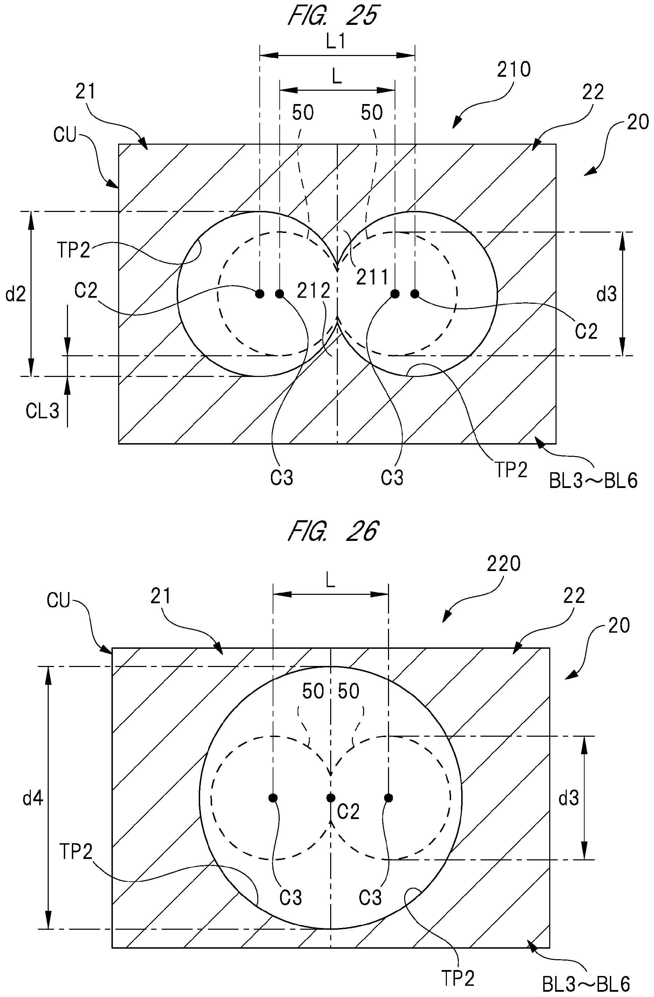

As illustrated in FIG. 25, an extruder 210 of the seventeenth embodiment differs from the extruder 90 of the fifth embodiment (see FIG. 13) only in that the distance L1 between the centers c2 of the large conveyance paths TP2 is made larger than the distance L between the rotation centers c3 of the pair of screws 50 (L1 > L) when the kneading region AR2 (see FIG. 2) is viewed in the axial direction of the pair of screws 50. Thus, an upper convex portion 211 and a lower convex portion 212 each enter between the pair of adjacent screws 50.

The extruder 210 of the seventeenth embodiment configured as described above can also achieve substantially the same effects as the extruder 90 of the fifth embodiment described above. In addition, in the extruder 210 of the seventeenth embodiment, the upper convex portion 211 and the lower convex portion 212 each enter between the pair of adjacent screws 50, so that the pair of screws 50 can be prevented from approaching each other and interfering with each other.

### <Eighteenth Embodiment>

As illustrated in FIG. 26, an extruder 220 of the eighteenth embodiment differs from the extruder 210 of the seventeenth embodiment (see FIG. 25) in that the pair of cylinders 21 and 22 each formed to have a semicircular internal cross-sectional shape are butted against each other, whereby the centers c2 of the respective large conveyance paths TP2 are made into one common point, when the kneading region AR2 (see FIG. 2) is viewed in the axial direction of the pair of screws 50. In addition, a diameter d4 of the pair of large conveyance paths TP2 is made larger than that of the extruder 210 of the seventeenth embodiment (d4 > d2) such that the pair of screws 50 (outer diameter d3) can be housed therein.

The extruder 220 of the eighteenth embodiment configured as described above can also achieve substantially the same effects as the extruder 210 of the seventeenth embodiment described above. In addition, in the extruder 220 of the eighteenth embodiment, the cross-sectional shape of the pair of large conveyance paths TP2 is made into a circular shape obtained by butting semicircular shapes together, so that it is possible to simplify the shape of the pair of cylinders 21 and 22 and further manufacture the extruder 220 easily.

### <Nineteenth Embodiment>

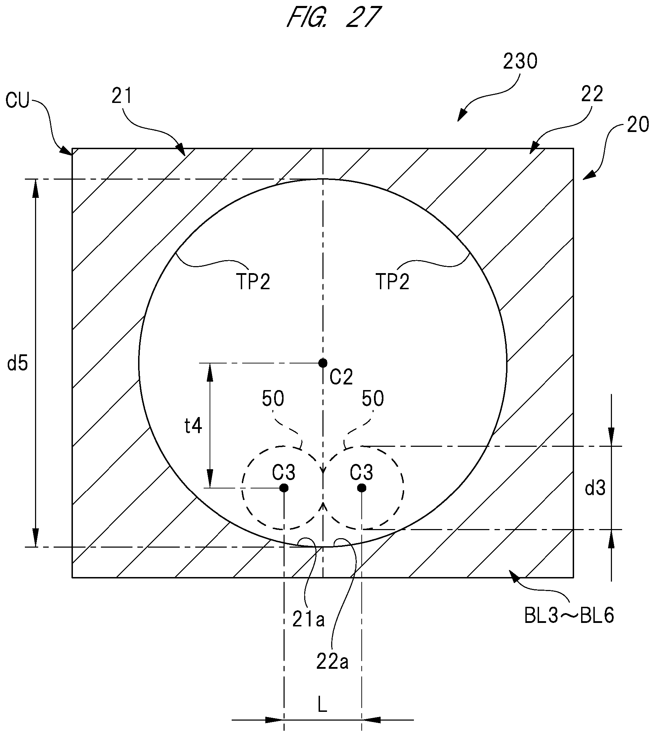

As illustrated in FIG. 27, an extruder 230 of the nineteenth embodiment differs from the extruder 220 of the eighteenth embodiment (see FIG. 26) in that a diameter d5 of the pair of large conveyance paths TP2 is made larger (d5 > d4, d5 ≈ 4.5 × d3) when the kneading region AR2 (see FIG. 2) is viewed in the axial direction of the pair of screws 50. Also, the extruder 230 differs from the extruder 220 in that the rotation centers c3 of the pair of screws 50 are offset by a distance t4 (t4 > d3) from the center c2 of the pair of large conveyance paths TP2 toward the lower walls 21a and 22a of the pair of cylinders 21 and 22.

The extruder 230 of the nineteenth embodiment configured as described above can also achieve substantially the same effects as the extruder 220 of the eighteenth embodiment described above. In addition, the extruder 230 of the nineteenth embodiment can prevent the resin raw material (resin pellets PR, molten resin MR) from remaining on the lower side of the large conveyance paths TP2 in the gravity direction for a long period of time.

The present invention is not limited to the embodiments described above, and it goes without saying that various modifications are possible within the range not departing from the gist of the present invention. For example, a "twin-screw extruder" equipped with the pair of screws 50 is illustrated in the embodiments described above, but the present invention is not limited to this, and can also be applied to an extruder with a single screw (single-screw extruder).

Moreover, the material, shape, dimensions, number, installation location, and others of each component in each of the embodiments described above are not particularly limited to those of the above-mentioned embodiments as long as it is possible to achieve the present invention.

### Reference Signs List

10: extruder, 20: kneading processing unit, 21: cylinder, 21a: lower wall, 21b: upper wall, 21c: side wall portion, 22: cylinder, 22a: lower wall, 22b: upper wall, 22c: side wall portion, 23: hopper, 24: pellet inlet, 25: pellet outlet, 26: supply port, 27: molten resin discharge port (discharge port), 28: conversion adapter, 29: conversion adapter, 40: drive unit, 41: electric motor, 41a: rotation shaft, 42: reducer, 42a: output shaft, 50: screw, 51: shaft, 52: forward feed flight (conveying section), 52a: thread, 52b: fixing hole, 53: forward feed kneading element (kneading section), 53a: angular portion, 53b: fixing hole, 60: extruder, 70: extruder, 71: backward feed flight, 71a: thread, 71b: fixing hole, 72: backward feed kneading element, 72a: angular portion, 72b: fixing hole, 80: extruder, 81: convex portion, 82: arc portion, 90: extruder, 100: extruder, 101: lower straight portion (straight portion), 102: upper straight portion (straight portion), 110: extruder, 120: extruder, 130: extruder, 140: extruder, 150: extruder, 151: arc-shaped connection portion, 160: extruder, 170: extruder, 171: arc-shaped connection portion, 180: extruder, 181: rotational vibration suppression member, 190: extruder, 191: rotational vibration suppression member, 200: extruder, 201: vent port, 202: vacuum pump, 203: gas pipe, 204: residue tank, 205: monomer tank, 206: takeoff cock, 207: residue discharge port (discharge port), 210: extruder, 211: upper convex portion, 212: lower convex portion, 220: extruder, 230: extruder, AR1: supply region (first region), AR2: kneading region (second region), AR3: metering region (third region), AR4: discharge region, BL1, BL2, BL7 to BL9: small block, BL3 to BL6: large block, BL10, BL11: large block, BS: base, CL: minute clearance, CL1: lower clearance, CL2: upper clearance, CL3: clearance, CL4: upper clearance, CU: cylinder unit, FD: gravimetric feeder, FL1: installation floor, FL2: upper floor, GS: pyrolysis gas, HT: heater, MR: molten resin (resin raw material), P: conveyance pipe, PM: resin raw material (polymer), PR: resin pellet (resin raw material), RS: residue, RSA: region, S1: cross-sectional area, S2: cross-sectional area, TP1: small conveyance path, TP2: large conveyance path, W1: arc-shaped inner wall, W2: arc-shaped inner wall, c1: center, c2: center, c3: rotation center

## Claims

1. An extruder comprising:
a cylinder including a first region and a second region;
a screw arranged inside the cylinder; and
a hopper provided in the first region of the cylinder and configured to feed a resin raw material,
wherein a cross-sectional area of the cylinder perpendicular to a direction from the first region to the second region is larger in the second region than in the first region.

2. The extruder according to claim 1,
wherein the screw located in the first region includes a conveying section, and
wherein the screw located in the second region includes a conveying section and a kneading section.

3. The extruder according to claim 2,
wherein the kneading section is made up of a backward feed kneading element.

4. The extruder according to claim 1,
wherein a discharge port configured to discharge a resin after kneading the resin raw material is connected to the second region of the cylinder.

5. The extruder according to claim 1,
wherein a discharge port configured to discharge a residue after pyrolyzing the resin raw material is connected to the second region of the cylinder.

6. The extruder according to claim 1,
wherein the cylinder further includes a third region,
wherein the second region and the third region are adjacent to each other, and
wherein the cross-sectional area of the cylinder is larger in the second region than in the first region and the third region.

7. The extruder according to claim 1,
wherein the cylinder includes a rotational vibration suppression member located in the second region and configured to suppress a rotational vibration of the screw.

8. The extruder according to claim 1,
wherein two cylinders each equivalent to the cylinder are arranged parallel to each other, insides of the cylinders communicate with each other, and the screw is arranged inside each of the cylinders.

9. The extruder according to claim 8,
wherein, when the second region is viewed in an axial direction of the screw, a rotation center of each of the screws is offset from a rotation center of each of the cylinders toward lower walls that form each of the cylinders.

10. The extruder according to claim 9,
wherein the lower walls have a convex portion that enters between the screws adjacent to each other, and
wherein the convex portion has arc portions that follow outer shapes of the screws.

11. The extruder according to claim 8,
wherein, when the second region is viewed in an axial direction of the screw, rotation centers of the screws coincide with centers of the cylinders.

12. The extruder according to claim 9 or 11,
wherein a straight portion that connects an arc-shaped inner wall forming the one cylinder and an arc-shaped inner wall forming the other cylinder with a tangent is provided between the cylinders adjacent to each other.

13. The extruder according to claim 8,
wherein the cylinders have side wall portions capable of supporting opposite sides of a facing side of the screws adjacent to each other.

14. The extruder according to claim 13,
wherein lower walls that form the cylinders have a convex portion that enters between the screws adjacent to each other, and
wherein the convex portion has arc portions that follow outer shapes of the screws.

15. The extruder according to claim 13,
wherein a straight portion that connects an arc-shaped inner wall forming the one cylinder and an arc-shaped inner wall forming the other cylinder with a tangent is provided on at least one of lower walls that form the cylinders and upper walls on a side opposite to a side provided with the lower walls.

16. The extruder according to claim 8,
wherein, when the second region is viewed in an axial direction of the screw, internal shapes of each of the cylinders are rectangular.

17. The extruder according to claim 16,
wherein an arc-shaped connection portion is provided at each corner inside the cylinders.

18. The extruder according to claim 17,
wherein lower walls that form each of the cylinders have a convex portion that enters between the screws adjacent to each other, and
wherein the convex portion has arc portions that follow outer shapes of the screws.
